# EUROPEAN PATENT SPECIFICATION

(11) **EP 2 551 421 B1**
(45) Date of publication and mention of the grant of the patent: **06.07.2016**
(21) Application number: 11425202.6
(22) Date of filing: 26.07.2011
(51) Int. Cl.: E04F 13/08, F24J 2/04

(54) **A photovoltaic module which can be installed on a vertical and/or inclined wall**
Photovoltaisches Modul zur Installation an einer vertikalen und/oder geneigten Wand
Module photovoltaïque pouvant être installé sur une paroi verticale et/ou inclinée

(43) Date of publication of application: 30.01.2013
(73) Proprietor: Cappello Alluminio S.r.l., 97100 Ragusa (IT)
(72) Inventor: Cappello, Giuseppe, 97010 Giarratana (Ragusa) (IT); Cappello, Giovanni, 97010 Giarratana (Ragusa) (IT); Cappello, Giorgio, 97010 Giarratana (Ragusa) (IT)
(74) Representative: Rapisardi, Mariacristina

(56) References cited:
- WO-A1-2010/074701
- WO-A1-2011/086729

## Description

The present invention refers to a photovoltaic module installed on a vertical or inclined wall.

The specific application in particular regards the installation of photovoltaic panels on vertical or inclined walls of still existing buildings.

As it is known, the installation of photovoltaic panels on still existing buildings can sometimes be rather long and complicated usually due to the specific fixing system adopted.

WO2011/086729A1 and WO2012/074701A1 disclose a photovoltaic module according to the preamble of claim 1.

The coating with the photovoltaic panels so realized has furthermore not only to architectonically integrate itself perfectly with the building, but also to possibly improve their characteristics of performance, especially in terms of thermal transmittance.

Technical task of the invention is to provide for a photovoltaic module which obviates the drawbacks lamented in the known art.

Within this technical task, one purpose of the invention is to provide a photovoltaic module which can be laid with extreme easiness and versatility upon any existing structure.

Other purpose of the invention is to provide a photovoltaic module with which a coating can be realized, which architectonically integrates itself with the building on which it is installed.

Further purpose of the invention is to provide a photovoltaic module able to reduce the thermal transmittance of the wall on which it is installed.

The technical task, and these and other purposes according to the present invention, are reached by realizing a photovoltaic module according to claim 1 below.

The photovoltaic module according to the invention can easily be adapted to any existing structure with vertical and/or inclined walls and architectonically integrates itself perfectly with the building upon which it is laid.

The photovoltaic module can be pre-assembled before being laid on the wall and has a frame which precisely matches in a guided way with the fixing profile to the wall.

The fixing system of the frame to the fixing profile is extremely simple and does not require the provision of holes and the use of screws.

For making the modular cover, the intervention on the existing wall structure is only limited to the making of the holes for the fixing screws of the fixing profiles.

The provision of a photovoltaic cover which modifies the thermal transmittance of the building can also advantageously determine a new energetic classification of the building itself.

Other features of the present invention are further defined in the subsequent claims.

Further features and advantages of the invention will be more evident from the description of a preferred but non exclusive embodiment of the photovoltaic module according to the find, illustrated in an indicative and non limitative way in the annexed drawings, in which:

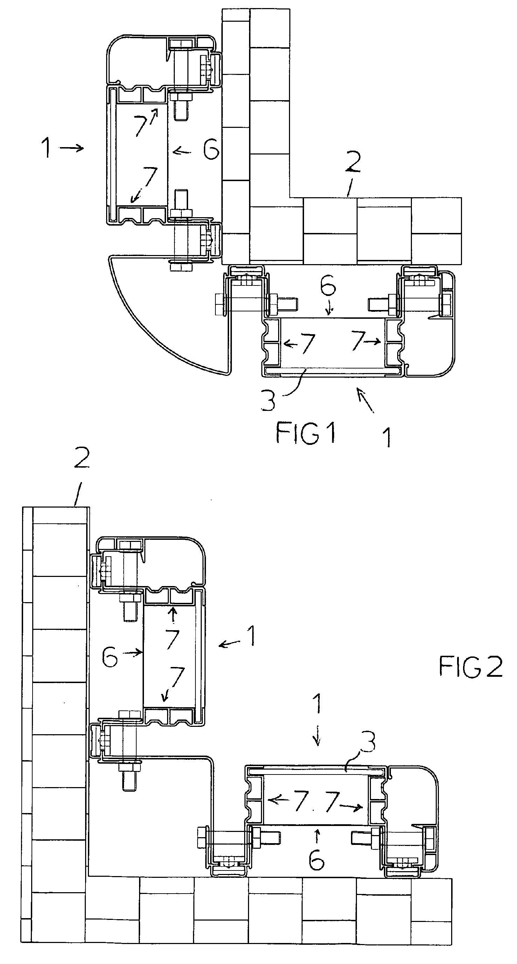

figure 1 shows a plan view of a first example of installation of photovoltaic modules according to the invention;
figure 2 shows a plan view of a second example of installation of photovoltaic modules according to the invention;

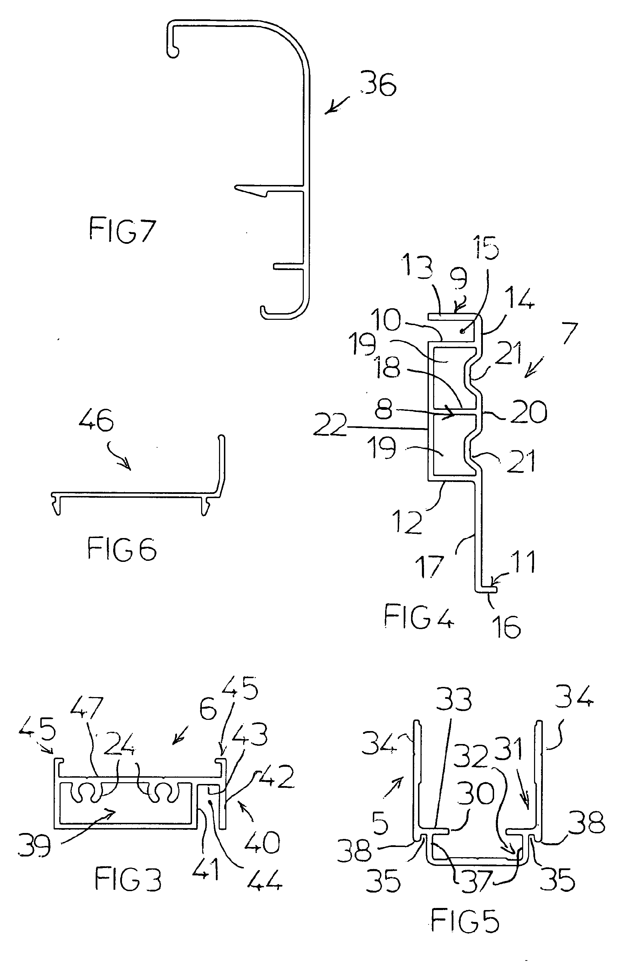

figure 3 shows the cross-section of the cross-beam of the frame of the photovoltaic module according to a preferred embodiment;
figure 4 shows the cross-section of an upright frame of the photovoltaic module according to another preferred embodiment;
figure 5 shows the cross-section of the cross-beam of a fixing profile of the photovoltaic module according to a preferred embodiment;
figures 6 and 7 show the cross-sections of special kind of profiles which can be used with a photovoltaic module according to the invention;

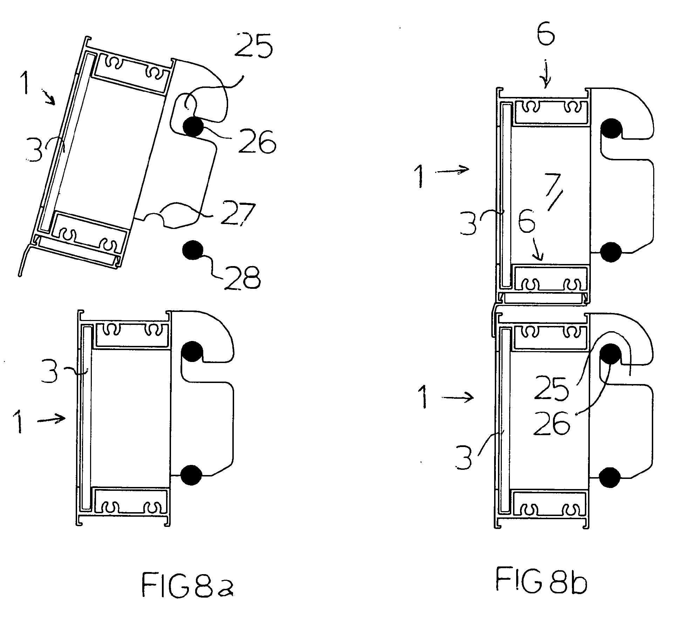

figures 8a and 8b show a vertical array of two photovoltaic modules in the different hooking phases to the pins of the respective fixing profile;

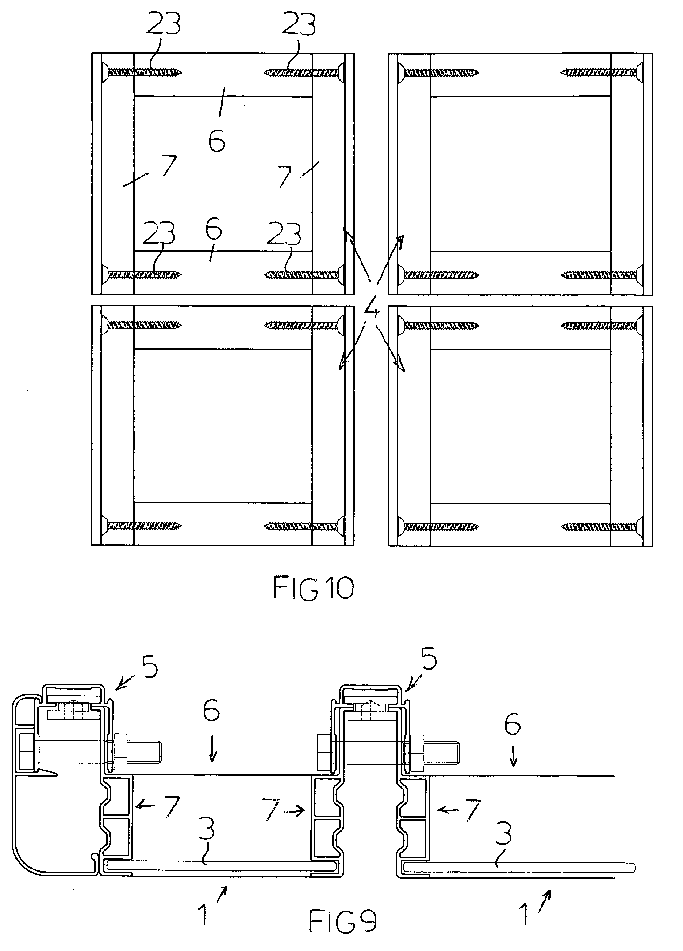

figure 9 shows a plan view of a third example of installation of photovoltaic modules according to the invention, where it is noted that in a horizontal array of photovoltaic modules, adjacent modules are hooked to the same fixing profile; figure 10 shows a front view of the placement of four photovoltaic modules according to the invention after their installation;

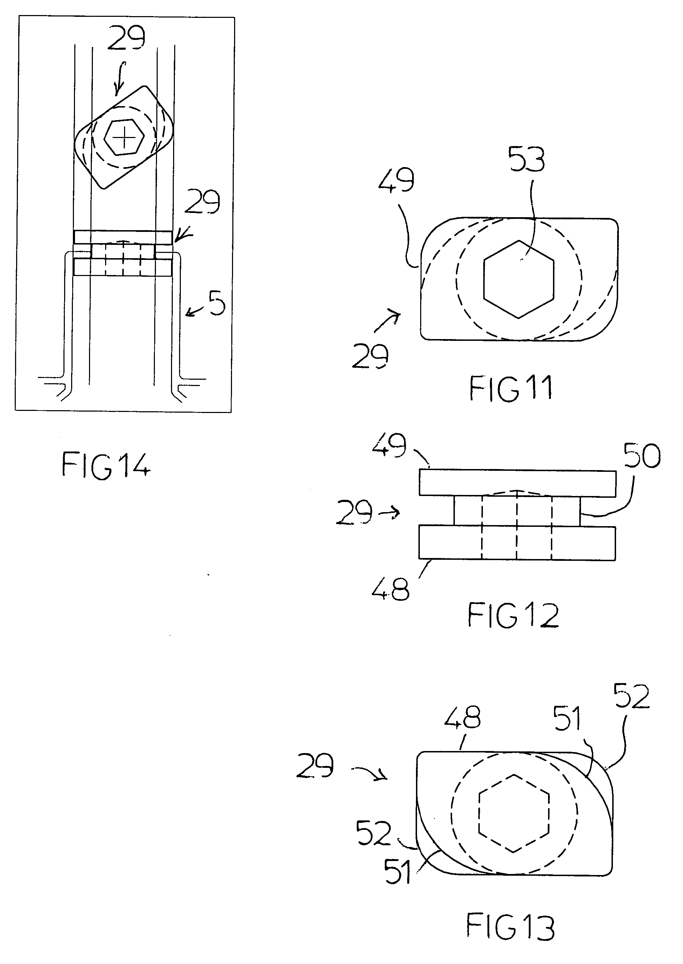

figures 11, 12 and 13 show a plan view from above in side elevation and a plan view from below of the second hooking means;
figure 14 schematically shows the hooking phases of the second hooking means.

With reference to the figures a photovoltaic module 1 is shown which can be installed on a vertical and/or inclined wall 2 of a building.

The photovoltaic module 1 comprises a photovoltaic panel 3, a frame 4 for a peripheral support of the photovoltaic panel 3, and at least one fixing profile 5 of the frame 4 to the wall 2.

The support frame 4 has at least a cross-beam 6 made of a profile joint with at least one profiled upright 7, and in particular has two cross-beams 6 and two uprights 7 which impart to the frame 4 a quadrangular shape.

The upright 7 comprises a box-shaped body 8, a front angular wing 9 extending from the front limiting wall 10 of the box-shaped body 8, and a rear angular wing 11 extending from the rear wall 12 of the box-shaped body 8.

The front angular wing 9 has a front portion 13 facing the front wall 10 of the box-shaped body 8, and a spacing portion 14 of the front portion 13 from the front wall 10 of the box-shaped body 8, so that the front wall 10 of the box-shaped body 8 limits with the front angular wing 9 an engagement seat 15 for one side of the photovoltaic panel 3.

The front angular wing 9 is L-shaped orthogonally extending from the external edge of the front limiting wall 10 of the box-shaped body 8.

The front angular wing 9 further extends the overall length of the upright 7.

The rear angular wing 11 has a rear portion 16 offset from the rear wall 12 of the box-shaped body 8 and a guide portion 17 along the fixing profile 5.

The rear angular wing 11 is L-shaped orthogonally extending from the external edge of the rear limiting wall 12 of the box-shaped body 8.

The rear angular wing 11 extends the overall length of the upright 7.

The spacing portion 14 being a part of the front wing 9 and the guide portion 17 being a part of the rear wing 11 are coplanar.

The box-shaped body 8 has an internal septum 18 through which it is divided in two hollow spaces 19.

The lateral external wall 20 of the box-shaped body 8 has for each hollow space 19, a lowered portion 21 in which a hole (not shown) is provided, which is aligned with a corresponding hole (not shown) present on the real lateral wall 22 of the box-shaped body 8 for introducing a fixing screw 23 which can be fastened in a suitable threaded bushing 24 present on the cross-beam 6.

First engagement meansare advantageously provided for the guide portion 17 present on the rear angular wing 11 with the fixing profile 5, and second engagement means for the rear portion 16 present on the rear angular wing 11 with the fixing profile 5.

The first engagement means comprise at least one profiled elongated hole 25 provided on the guide portion 17 present on the rear angular wing 11 and which can be transversally engaged by a corresponding pin 26 carried by the fixing profile 5.

The elongated hole 25 preferably has a L-shaped angular configuration open on the rear side of the rear angular wing 11.

The first engagement means further comprise a curved groove 27 present on the lower side of the guide portion 17 present on the rear angular wing 11 and which can be transversally engaged by a pin 28 carried by the fixing profile 5.

The second engagement means comprise at least one double eccentric element 29 which can be engaged through a groove 30 present on the fixing profile 5 for fastening the rear portion 16 of the rear angular wing 11 to the fixing profile 5.

The element 29 in particular has a first square plate 48 and a second square 49 superimposed with the same orientation and rigidly mutually connected by means of a central spacer 50.

The first plate 48 has two superimposed corners 51 smoother than the corners 52 of the second plate 49 to which they are superimposed. In this way the corners 52 of the second plate 49 are protruding with respect to the shape of the first plate 48.

The fixing profile 5 preferably has a first U-shaped portion 31, and a second also U-shaped portion 32 disposed on the external side of the base 33 of the first portion 31.

The groove 30 is made at the base 33 of the first portion 31 of the fixing profile 5.

The pin 26 and the pin 28 are transversally carried from the opposed lateral walls 34 of the first portion 31 of the fixing profile 5.

On the fixing profile 5 at least one seat 35 is defined for the engagement of a first kind of special profile 36.

The seat 35 is made between a side wall 37 of the second portion 32 of the fixing profile 5 and an extension 38 of a side wall 34 of the first portion 31 of the fixing profile 5 from the external side of the base 33 of the first portion 31 of the fixing profile 5.

The cross-beam 6 preferably comprises a box-shaped body 39, a front angular wing 40 extending from the front wall 41 of the box-shaped body 39 and has a front portion 42 facing the front wall 41 of the box-shaped body 39 and a spacing portion 43 of the front portion 42 of the front angular wing 40 from the front wall 41 of the box-shaped body 39, such that the front wall 41 of the box-shaped body 39 delimits with the front angular wing 40 an engagement seat 44 for one side of the photovoltaic panel 3.

The front angular wing 40 of the cross-beam 6 is L-shaped orthogonally extending from one end of the front wall 41 of the box-shaped body 39.

In particular, the spacing portion 43 extends coplanar with the external side wall 47 of the box-shaped body 39.

The cross-beam 6 further has angular formations 45 for the engagement of a second kind of special profile 46.

A first angular formation 45 of the cross-beam 6 orthogonally extends from the box-shaped body 39, and a second angular formation 45 orthogonally extends from the front angular wing 42.

The method for the installation of photovoltaic modules 1 is briefly as follows. The photovoltaic modules 1 are assembled on the ground.

The fixing profiles 5 are fastened to the wall 2 in a parallel and equally spaced position in function of the width of the support frames 4 of the photovoltaic modules 1.

Each upright 7 is engaged with a corresponding fixing profile 5 by sliding with a rototranslatory movement the guide portion 17 of the rear angular wing 11 along the internal side of the lateral wall 34 of the fixing profile 5 until reaching the final position in which the pin 26 engages the internal end of the elongated hole 25 and the pin 28 engages the groove 27. In this position the rear portion 16 present on the rear angular wing 11 rests upon the base 33 of the fixing profile 5.

At this point the engagement so obtained is stabilized through the dual eccentric element 29 which is inserted with a predetermined angle through the groove 30 so passing the plate 48 through the groove 30 and positioning the spacer 50 into the groove 30, and consequently the plates 48 and 49 the one downwards and the one upwards the groove 30. Then the element 29 is rotated by means of the tip of a tool engaging a polygon footprint 53 of a conjugated shape, centrally present on the element 29. The rotation continues until the plate 48 interferes with the base 33 of the fixing profile 5 so fastening the rear portion 16 present on the rear angular wing 11 against the base 33 of the fixing profile 5.

The coating with the modules 1 so realized is architectonically integrated with the building, creating with the wall 2 a ventilated cavity so determining a relevant reduction of the thermal transmittance of the stretched wall 2.

The coating with the modules 1 further permits as said to make the modules 1 on the ground and their subsequent installation through simple and rapid mechanical assemblies.

The photovoltaic module so conceived is susceptible of numerous changes and variations, all within the inventive concept; furthermore all details can be substituted with technically equivalent elements.

In practice the used materials, and also their dimensions, can be of any kind according to the needs and the state of the art.

## Claims

1. A photovoltaic module (1) which can be installed on a vertical and/or inclined wall (2), comprising a photovoltaic panel (3), a peripheral support frame (4) of the photovoltaic panel (3), and at least a fixing profile (5) of the frame (4) to the wall (2), the support frame (4) having at least one cross-beam (6) made of a profile joint with at least one upright (7) made of a profile, the upright (7) comprising a box-shaped body (8), a front angular wing (9) extending at the front of the box-shaped body (8), a rear angular wing (11) extending at the rear of the box-shaped body (8), said front angular wing (9) having a front portion (13) facing the front wall (10) of the box-shaped body (8), and a spacing portion (14) of the front portion (13) from the front wall (10) of the box-shaped body (8), such that the front wall (10) of the box-shaped body (8) delimits with the front angular wing (9) an engagement seat (15) for one side of the photovoltaic panel (3), said rear angular wing (11) having a rear portion (16) offset from the rear wall (12) of the box-shaped body (8) and a guide portion (17) along the fixing profile (5), said guide portion (17) having first engagement means for engagement with said fixing profile (5), said rear portion (16) of the rear angular wing (11) having second engagement means for engagement with said fixing profile (5), **characterized in that** said first engagement means comprise at least one shaped elongated hole (25) made on the guide portion (17) present on the rear angular wing (11) and which can be transversally engaged from a corresponding pin (26) carried by the fixing profile (5), and **in that** said second engagement means comprise a double eccentric element (29) which can be engaged through a groove (30) present in the fixing profile (5) for fastening the rear portion (16) of the rear angular wing (11) to the fixing profile (5).

2. The photovoltaic module (1) according to preceding claim, **characterized in that** the rear angular wing (11) extends the overall length of the upright (7).

3. The photovoltaic module (1) according to any of preceding claims, **characterized in that** the front angular wing (9) extends the overall length of the upright (7).

4. The photovoltaic module (1) according to any of preceding claims, **characterized in that** said front (9) and respectively rear (11) angular wing are L-shaped orthogonally extending from the external edge of the front (10) and respectively rear (12) limit wall of the box-shaped body (8).

5. The photovoltaic module (1) according to preceding claim, **characterized in that** said spacing portion (14) and said guide portion (17) are coplanar.

6. The photovoltaic module (1) according to preceding claim, **characterized in that** said fixing profile (5) has first U-shaped portion (31), said groove (30) being made at the base (33) of said first portion (31) of said fixing profile (5), said pin (26) being transversally carried by the opposed side walls (34) of said first portion (31) of said fixing profile (5).

7. The photovoltaic module (1) according to preceding claim, **characterized in that** said fixing profile (5) has a second portion (32) also U-shaped and disposed on the external side of said base (33) of said first portion (31) of said fixing profile (5), at least one seat (35) being defined for the engagement of a first kind of special profile between a side wall (37) of said second portion (32) of said fixing profile (5) and an extension (38) of a side wall (34) of said first portion (31) of said fixing profile (5) from the external side of the base (33) of said first portion (31) of said fixing profile (5).

8. The photovoltaic module (1) according to any of preceding claims, **characterized in that** the cross-beam (6) comprises a box-shaped body (39), a front angular wing (40) extending at the front of the box-shaped body (39) and having a front portion (42) facing the front wall (41) of the box-shaped body (39) and a spacing portion (43) of the front portion (42) of the front angular wing (40) from the front wall (41) of the box-shaped body (39) such that the front wall (41) of the box-shaped body (39) delimits with the front angular wing (40) an engagement seat (44) for one side of the photovoltaic panel (3), said cross-beam (6) further having angular formations (45) for the engagement of a second kind of special profile.

9. The photovoltaic module (1) according to preceding claim, **characterized in that** the front angular wing (40) of the cross-beam (6) is L-shaped.

10. The photovoltaic module (1) according to preceding claim **characterized in that** a first angular formation (45) of the cross-beam (6) orthogonally extends from the box-shaped body (39), and a second angular formation (45) of the cross-beam (6) orthogonally extends from the front angular wing (40) of the cross-beam (6).

11. A method for the installation of photovoltaic modules (1) according to any of preceding claims for the coating of a vertical and/or inclined wall (2), **characterized in** fastening to the wall (2) the fixing profiles (5) by positioning them parallel and equally spaced in function of the width of the support frames (4), engaging the uprights (7) by sliding the guide portion (17) of the rear angular wing (11) of the uprights (7) along the corresponding fixing profile (5) until reaching their final position in which they are engaged with the corresponding fixing profiles (5) through the first engagement means, and stabilizing the engagement through the second engagement means.

## Patentansprüche

1. Photovoltaikmodul (1), das an einer vertikalen und/oder schrägen Wand (2) installiert werden kann, umfassend ein Photovoltaikpaneel (3), einen umfangseitigen Halterungsrahmen (4) des Photovoltaikpaneels (3) und mindestens ein Befestigungsprofil (5) des Rahmens (4) an der Wand (2), wobei der Halterungsrahmen (4) mindestens eine Querstrebe (6) aufweist, bestehend aus einem Profil, verbunden mit mindestens einem Pfosten (7), bestehend aus einem Profil, wobei der Pfosten (7) einen kastenförmigen Körper (8), einen frontseitigen Winkelflügel (9), der sich an der Frontseite des kastenförmigen Körpers (8) erstreckt, und einen rückseitigen Winkelflügel (11), der sich an der Rückseite des kastenförmigen Körpers (8) erstreckt, aufweist, wobei der frontseitige Winkelflügel (9) einen frontseitigen Abschnitt (13) aufweist, der der frontseitigen Wand (10) des kastenförmigen Körpers (8) zugewandt ist, und einen Abstandsabschnitt (14) des frontseitigen Abschnitts (13) von der frontseitigen Wand (10) des kastenförmigen Körpers (8), sodass die frontseitige Wand (10) des kastenförmigen Körpers (8) mit dem frontseitigen Winkelflügel (9) einen Eingriffssitz (15) für eine Seite des Photovoltaikpaneels (3) abgrenzt, wobei der rückseitige Winkelflügel (11) einen rückseitigen Abschnitt (16) aufweist, versetzt von der rückseitigen Wand (12) des kastenförmigen Körpers (8), und einen Führungsabschnitt (17) entlang des Befestigungsprofils (5), wobei der Führungsabschnitt (17) erste Eingriffsmittel aufweist, für den Eingriff in das Befestigungsprofil (5), wobei der rückseitige Abschnitt (16) des rückseitigen Winkelflügels (11) zweite Eingriffsmittel für den Eingriff in das Befestigungsprofil (5) aufweist, **dadurch gekennzeichnet, dass** die ersten Eingriffsmittel mindestens ein länglich geformtes Loch (25) umfassen, ausgebildet auf dem Führungsabschnitt (17) am rückseitigen Winkelflügel (11), in das quer ein entsprechender Stift (26) eingreifen kann, getragen vom Befestigungsprofil (5), und dadurch, dass die zweiten Eingriffsmittel ein doppeltes Exzenterelement (29) umfassen, das über eine Nut (30) im Befestigungsprofil (5) eingegriffen werden kann, um den rückseitigen Abschnitt (16) des rückseitigen Winkelflügels (11) am Befestigungsprofil (5) zu fixieren.

2. Photovoltaikmodul (1) nach dem vorhergehenden Anspruch, **dadurch gekennzeichnet, dass** sich der rückseitige Winkelflügel (11) über die gesamte Länge des Pfostens (7) erstreckt.

3. Photovoltaikmodul (1) nach einem der vorhergehenden Ansprüche, **dadurch gekennzeichnet, dass** sich der frontseitige Winkelflügel (9) über die gesamte Länge des Pfostens (7) erstreckt.

4. Photovoltaikmodul (1) nach einem der vorhergehenden Ansprüche, **dadurch gekennzeichnet, dass** der frontseitige (9) und der jeweilige rückseitige (11) Winkelflügel L-förmig sind und sich rechtwinklig von der Außenkante der frontseitigen (10) und jeweiligen rückseitigen (12) Grenzwand des kastenförmigen Körpers (8) erstrecken.

5. Photovoltaikmodul (1) nach dem vorhergehenden Anspruch, **dadurch gekennzeichnet**, der Abstandsabschnitt (14) und der Führungsabschnitt (17) in der gleichen Ebene liegen.

6. Photovoltaikmodul (1) nach dem vorhergehenden Anspruch, **dadurch gekennzeichnet, dass** das Befestigungsprofil (5) einen U-förmigen Abschnitt (31) aufweist und die Nut (30) an der Basis (33) des ersten Abschnitts (31) des Befestigungsprofils (5) ausgebildet ist, wobei der Stift (26) quer durch die entgegengesetzten Seitenwände (34) des ersten Abschnitts (31) des Befestigungsprofils (5) getragen wird.

7. Photovoltaikmodul (1) nach dem vorhergehenden Anspruch, **dadurch gekennzeichnet, dass** das Befestigungsprofil (5) einen zweiten Abschnitt (32) aufweist, der ebenfalls U-förmig und auf der Außenseite der Basis (33) des ersten Abschnitts (31) des Befestigungsprofils (5) angeordnet ist, wobei mindestens ein Sitz (35) für das Eingreifen einer ersten Art eines Spezialprofils zwischen einer Seitenwand (37) des zweiten Abschnitts (32) des Befestigungsprofils (5) und einer Ausdehnung (38) einer Seitenwand (34) des ersten Abschnitts (31) des Befestigungsprofils (5) von der Außenseite der Basis (33) des ersten Abschnitts (31) des Befestigungsprofils (5) definiert ist.

8. Photovoltaikmodul (1) nach einem der vorhergehenden Ansprüche, **dadurch gekennzeichnet, dass** die Querstrebe (6) einen kastenförmigen Körper (39) umfasst, einen frontseitigen Winkelflügel (40), der sich an der Frontseite des kastenförmigen Körpers (39) erstreckt und einen frontseitigen Abschnitt (42) aufweist, der der frontseitigen Wand (41) des kastenförmigen Körpers (39) zugewandt ist, und einen Abstandsabschnitt (43) des frontseitigen Abschnitts (42) des frontseitigen Winkelflügels (40) von der frontseitigen Wand (41) des kastenförmigen Körpers (39), sodass die frontseitige Wand (41) des kastenförmigen Körpers (39) mit dem frontseitigen Winkelflügel (40) einen Eingriffssitz (44) für eine Seite des Photovoltaikpaneels (3) abgrenzt, wobei die Querstrebe (6) zudem Winkelformationen (45) für den Eingriff einer zweiten Art eines Spezialprofils aufweist.

9. Photovoltaikmodul (1) nach dem vorhergehenden Anspruch, **dadurch gekennzeichnet, dass** der rückseitige Winkelflügel (40) der Querstrebe (6) L-förmig ist.

10. Photovoltaikmodul (1) nach dem vorhergehenden Anspruch, **dadurch gekennzeichnet, dass** sich eine erste Winkelformation (45) der Querstrebe (6) rechtwinklig vom kastenförmigen Körper (39) erstreckt, und sich eine zweite Winkelformation (45) der Querstrebe (6) rechtwinklig vom frontseitigen Winkelflügel (40) der Querstrebe (6) erstreckt.

11. Verfahren zum Installieren von Photovoltaikmodulen (1) nach einem der vorhergehenden Ansprüche für das Beschichten einer vertikalen und/oder schrägen Wand (2), **dadurch gekennzeichnet, dass** die Befestigungsprofile (5) an der Wand fixiert werden, indem sie parallel und gleich beabstandet je nach Breite der Halterungsrahmen (4) positioniert werden, in die Pfosten (7) eingreifen, indem der Führungsabschnitt (17) des rückseitigen Winkelflügels (11) der Pfosten (7) entlang des entsprechenden Befestigungsprofils (5) vorgeschoben wird, bis sie ihre abschließende Position erreichen, in der sie mit den entsprechenden Befestigungsprofilen (5) im Eingriff sind, und zwar durch die ersten Eingriffsmittel und die Stabilisierung des Eingriffs durch die zweiten Eingriffsmittel.

## Revendications

1. Panneau photovoltaïque (1) pouvant être installé sur une cloison verticale et/ou inclinée (2), comprenant un panneau photovoltaïque (3), un châssis de support périphérique (4) du panneau photovoltaïque (3) et au moins un profil de fixation (5) du châssis (4) sur la cloison (2), le châssis de support (4) ayant au moins une entretoise (6) constituée d'un profilé joint avec au moins un montant (7) constitué d'un profilé, le montant (7) comprenant un corps en forme de boîtier (8), une aile angulaire antérieure (9) se développant à l'avant du corps en forme de boîtier (8), une aile angulaire postérieure (11) se développant à l'arrière du corps en forme de boîtier (8), ladite aile angulaire antérieure (9) ayant une partie antérieure (13) faisant face à la cloison antérieure (10) du corps en forme de boîtier (8), ainsi qu'une partie intermédiaire (14) de la partie antérieure (13) à partir de la cloison antérieure (10) du corps en forme de boîtier (8), de sorte que la cloison antérieure (10) du corps en forme de boîtier (8) délimite avec l'aile angulaire antérieure (9) un siège d'engagement (15) pour un côté du panneau photovoltaïque (3), ladite aile angulaire postérieure (11) ayant une partie postérieure (16) décalée de la cloison postérieure (12) du corps en forme de boîtier (8) et une partie de guidage (17) le long du profil de fixation (5), ladite partie de guidage (17) ayant des premiers moyens de mise en prise pour la mise en prise avec ledit profil de fixation (5), ladite partie postérieure (16) de l'aile angulaire postérieure (11) ayant des seconds moyens de mise en prise pour la mise en prise avec ledit profil de fixation (5), **caractérisé en ce que** lesdits premiers moyens de mise en prise comprennent au moins un orifice allongé façonné (25) réalisé sur la partie de guidage (17) présente sur l'aile angulaire postérieure (11) et qui peut être mis en prise transversalement par un axe correspondant (26) porté par le profil de fixation (5), et **en ce que** lesdits seconds moyens de mise en prise comprennent un élément excentrique double (29) pouvant s'engager à travers une rainure (30) présente dans le profil de fixation (5) pour fixer la partie postérieure (16) de l'aile angulaire postérieure (11) au profil de fixation (5).

2. Panneau photovoltaïque (1) selon la revendication précédente, **caractérisé en ce que** l'aile angulaire postérieure (11) dépasse la longueur totale du montant (7).

3. Panneau photovoltaïque (1) selon l'une quelconque des revendications précédentes, **caractérisé en ce que** l'aile angulaire antérieure (9) dépasse la longueur totale du montant (7).

4. Panneau photovoltaïque (1) selon l'une quelconque des revendications précédentes, **caractérisé en ce que** lesdites ailes angulaires respectivement antérieure (9) et postérieure (11) se prolongent orthogonalement en forme de « L » du bord extérieur de la cloison de limitation respectivement antérieure (10) et postérieure (12) du corps en forme de boîtier (8).

5. Panneau photovoltaïque (1) selon la revendication précédente, **caractérisé en ce que** ladite partie intermédiaire (14) et ladite partie de guidage (17) sont coplanaires.

6. Panneau photovoltaïque (1) selon la revendication précédente, **caractérisé en ce que** ledit profil de fixation (5) possède une première partie en forme de « U » (31), ladite rainure (30) étant réalisée à la base (33) de ladite première partie (31) dudit profil de fixation (5), ledit axe (26) étant transversalement porté par les cloisons latérales opposées (34) de ladite première partie (31) dudit profil de fixation (5).

7. Panneau photovoltaïque (1) selon la revendication précédente, **caractérisé en ce que** ledit profil de fixation (5) possède une seconde partie (32) aussi en forme de « U » et disposée sur le côté extérieur de ladite base (33) de ladite première partie (31) dudit profil de fixation (5), un siège (35) étant au moins défini pour la mise en prise avec un premier type de profil particulier entre une cloison latérale (37) de ladite seconde partie (32) dudit profil de fixation (5) et une extension (38) d'une cloison latérale (34) de ladite première partie (31) dudit profil de fixation (5) à partir du côté extérieur de la base (33) de ladite première partie (31) dudit profil de fixation (5).

8. Panneau photovoltaïque (1) selon l'une quelconque des revendications précédentes, **caractérisé en ce que** l'entretoise (6) comprend un corps en forme de boîtier (39), une aile angulaire antérieure (40) se prolongeant à l'avant du corps en forme de boîtier (39) et ayant une partie antérieure (42) faisant face à la cloison antérieure (41) du corps en forme de boîtier (39) et une partie intermédiaire (43) de la partie antérieure (42) de l'aile angulaire antérieure (40) à partir de la cloison antérieure (41)du corps en forme de boîtier (39) de sorte que la cloison antérieure (41) du corps en forme de boîtier (39) délimite avec l'aile angulaire antérieure (40) un siège d'engagement (44) pour un côté du panneau photovoltaïque (3), ladite entretoise (6) ayant de plus des façonnages angulaires (45) pour la mise en prise avec un second type de profil particulier.

9. Panneau photovoltaïque (1) selon la revendication précédente, **caractérisé en ce que** l'aile angulaire antérieure (40) de l'entretoise (6) est en forme de « L ».

10. Panneau photovoltaïque (1) selon la revendication précédente, **caractérisé en ce qu'**un premier façonnage angulaire (45) de l'entretoise (6) se prolonge orthogonalement à partir du corps en forme de boîtier (39), et un second façonnage angulaire (45) de l'entretoise (6) se développe orthogonalement à partir de l'aile angulaire antérieure (40) de l'entretoise (6).

11. Procédé d'installation de panneaux photovoltaïques (1) selon l'une quelconque des revendications précédentes pour le revêtement d'une cloison verticale et/ou inclinée (2), **caractérisé par** la fixation à la cloison (2) des profils de fixation (5) en les positionnant de façon parallèle et équidistante en fonction de la largeur des châssis de support (4), la mise en prise des montants (7) en faisant coulisser la partie de guidage (17) de l'aile angulaire postérieure (11) des montants (7) le long du profil de fixation correspondant (5) jusqu'à ce qu'ils atteignent leur position finale dans laquelle ils sont engagés avec les profils de fixation correspondants (5) grâce aux premiers moyens de mise en prise, et stabiliser la mise en prise grâce aux seconds moyens de mise en prise.
